# EUROPEAN PATENT SPECIFICATION

(11) **EP 3 499 948 B1**
(45) Date of publication and mention of the grant of the patent: **27.05.2020**
(21) Application number: 16914430.0
(22) Date of filing: 29.08.2016
(51) Int. Cl.: H04W 24/10, H04B 7/06

(54) **CHANNEL QUALITY MEASUREMENT AND FEEDBACK METHOD AND APPARATUS**
KANALQUALITÄTSMESSUNG SOWIE RÜCKKOPPLUNGSVERFAHREN UND -VORRICHTUNG
PROCÉDÉ ET APPAREIL DE MESURAGE ET DE RÉTROACTION DE QUALITÉ DE CANAL

(43) Date of publication of application: 19.06.2019
(73) Proprietor: Huawei Technologies Co., Ltd., Longgang Shenzhen, Guangdong 518129 (CN)
(72) Inventor: LIU, Jianqin, Shenzhen Guangdong 518129 (CN)
(74) Representative: Epping - Hermann - Fischer
(86) International application number: PCT/CN2016/097141
(87) International publication number: WO 2018/039860

(56) References cited:
- EP-A1- 2 584 727
- WO-A1-2013/028703
- WO-A1-2015/141619
- CN-A- 104 396 151
- US-A1- 2013 163 457
- US-A1- 2013 322 376
- US-A1- 2014 098 689
- US-A1- 2015 288 499

## Description

### TECHNICAL FIELD

Embodiments of the present invention relate to the communications field, and more specifically, to a channel quality measurement and feedback method and apparatus.

### BACKGROUND

A communications system may usually use different types of reference signals: One type of reference signal is used to estimate a channel, so that coherent demodulation may be performed on a received signal that includes control information or data. Another type is used to measure a channel state or channel quality, so as to schedule user equipment (UE). In a downlink system of the 3rd Generation Partnership Project (3GPP) Long Term Evolution (LTE) release 10 (R10), a reference signal used for coherent demodulation is referred to as a demodulation reference signal (DMRS). A reference signal used for channel state information measurement is referred to as a channel state information-reference signal (CSI-RS).

To further improve spectrum efficiency, a large-scale antenna is introduced in a Rel-14 standard, so that data transmission on more antenna ports is supported. For example, a total quantity of antenna ports used for data transmission may further be 16, 32, or 64. As the quantity of antenna ports used for data transmission increases, overheads and design complexity of measurement reference signals at a larger quantity of antenna ports also increase accordingly. For example, based on an existing CSI-RS density, a CSI-RS on each port occupies one resource unit, so that CSI-RS resources at 32 or 64 ports need to occupy 32 or 64 resource units. An increasing quantity of antenna ports occupy an increasing quantity of resource units, so that overheads of measuring the CSI-RS increase significantly.

To reduce the overheads of measuring the CSI-RS, a beam-formed CSI-RS mechanism is introduced, and a complex-valued weighting coefficient is applied to the CSI-RS, so that a plurality of CSI-RS ports may be virtualized as one equivalent CSI-RS port. For example, reference signal resources on 32 to-be-measured ports may be transformed into beam-formed CSI-RS resources on four equivalent ports by applying an 8x1 discrete Fourier transform (DFT) vector.

In this method, a frequency selection characteristic of pre-coding applied to the CSI-RS is not considered, in other words, pre-coding of a CSI-RS resource on entire system bandwidth is the same. As a result, channel quality measurement based on a beam-formed reference signal cannot reflect the most matched and true channel state information, and system performance is deteriorated.

EP 2 584 727 A1 relates to a method for feeding back channel state information, comprising: a piece of user equipment (UE) determining channel state information which comprises a first type of Precoding Matrix Indicator (PMI) and a second type of PMI, wherein the first type of PMI is used for indicating an index of a first precoding matrix in a first precoding codebook, the first precoding matrix is used for mapping channel information of a wideband and/or long-term channel, the second type of PMI is used for indicating an index of a second precoding matrix in a second precoding codebook, and the second precoding matrix is used for mapping channel information of a subband and/or short-term channel; and the UE feeding back the channel state information which comprises the first type of PMI and the second type of PMI on a Physical Uplink Shared Channel (PUSCH).

US 2014/098689 A1 relates to a method for enabling channel state information (CSI) feedback using a multi-component codebook structure, the method comprising: measuring a plurality of channels; determining CSI feedback for each component codebook of a plurality of component codebooks based on the measuring of the plurality of channels; and sending the CSI feedback for each component codebook of the plurality of component codebooks to a base station.

### SUMMARY

Embodiments of the present invention are defined by the appended claims. A channel quality measurement and feedback method and apparatus are provided, to improve system performance. According to a first aspect, a channel quality measurement and feedback method is provided, including: receiving K reference signals sent by a transmit end, where K is a positive integer; performing channel quality measurement based on the K reference signals and determining L pieces of channel state information CSI based on a measurement result, where L is a positive integer, each of the L pieces of CSI includes index number information of J sub-bands, and J is a positive integer, or each of the L pieces of CSI includes index number information of P reference signals, and P is a positive integer; and sending the L pieces of CSI to the transmit end.

In this embodiment of the present invention, channel quality measurement is performed based on the reference signals, and the L pieces of CSI are determined based on the measurement result. Each piece of CSI includes the index number information of the sub-bands or the index number information of the reference signals, so as to improve system performance.

In an embodiment of the present invention, L is a positive integer, and L≤K.

With reference to the first aspect, in an implementation of the first aspect, the L pieces of CSI include one common rank indicator RI, L pre-coding matrix indicators PMIs, and L channel quality indicators CQIs.

In an embodiment of the present invention, the L pieces of CSI may correspond to the common RI, so as to reduce CSI processing complexity and reporting overheads of the receive end.

With reference to the first aspect and the foregoing implementation, in another implementation of the first aspect, the L pieces of CSI include L RIs, the L PMIs, and the L CQIs.

In an embodiment of the present invention, the L pieces of CSI may correspond to the L RIs. In this case, each piece of CSI corresponds to one RI. For example, different reference signals may correspond to different RIs, so as to improve CSI flexibility, and maximize a quantity of spatial multiplexing layers and transmission efficiency of a system.

With reference to the first aspect and the foregoing implementations, in another implementation of the first aspect, each of the L PMIs includes J PMIs corresponding to the J sub-bands, and/or each of the L CQIs includes J CQIs corresponding to the J sub-bands.

With reference to the first aspect and the foregoing implementations, in another implementation of the first aspect, each of the L PMIs corresponds to at least one pre-coding matrix index.

In an embodiment of the present invention, different codebook structures may need different quantities of pre-coding matrices, and each PMI corresponds to at least one pre-coding matrix index, so as to meet requirements of different codebook structures.

With reference to the first aspect and the foregoing implementations, in another implementation of the first aspect, the sending the L pieces of CSI to the transmit end includes: sending the L pieces of CSI to the transmit end in a same feedback mode.

With reference to the first aspect and the foregoing implementations, in another implementation of the first aspect, the sending the L pieces of CSI to the transmit end includes: sending the L pieces of CSI to the transmit end by using a physical uplink shared channel PUSCH.

In an embodiment of the present invention, the receive end may send the L pieces of CSI to the transmit end by using the PUSCH. In this feedback manner, a CSI transmission capacity may not be limited.

With reference to the first aspect and the foregoing implementations, in another implementation of the first aspect, the method further includes: obtaining resource configuration information, where the resource configuration information includes time domain resource information and frequency domain resource information of each of the K reference signals, the time domain resource information includes subframe information, and the frequency domain resource information includes sub-band information.

With reference to the first aspect and the foregoing implementations, in another implementation of the first aspect, the method further includes: obtaining resource configuration information, where the resource configuration information includes time domain resource information of each of the K reference signals and indication information of a sub-band occupied by each reference signal, and the time domain resource information includes subframe information.

In an embodiment of the present invention, the subframe information is time domain resource location information corresponding to a reference signal, such as information about a specific subframe that is occupied by each reference signal and that is in the time domain resource. The sub-band information is frequency domain resource location information corresponding to a reference signal, such as information about a specific sub-band that is occupied by each reference signal and that is in a plurality of sub-bands of full bandwidth. Further, the subframe information may be alternatively indication information of a specific subframe that is occupied by a reference signal and that is in the time domain resource. The sub-band information may be alternatively indication information of a specific sub-band that is occupied by a reference signal and that is in the frequency domain resource.

With reference to the first aspect and the foregoing implementations, in another implementation of the first aspect, the indication information of the sub-band occupied by each of the K reference signals is determined by a predefined frequency hopping pattern function.

In an embodiment of the present invention, the indication information of the sub-band occupied by each of the K reference signals is determined by a frequency hopping pattern function, so as to obtain CSI of the full bandwidth.

With reference to the first aspect and the foregoing implementations, in another implementation of the first aspect, the J sub-bands are J sub-bands selected from a plurality of sub-bands corresponding to each of the L pieces of CSI.

With reference to the first aspect and the foregoing implementations, in another implementation of the first aspect, the P reference signals are P reference signals selected from a plurality of reference signals corresponding to at least one sub-band.

According to a second aspect, a channel quality measurement and feedback method is provided, including: sending K reference signals to a receive end, where K is a positive integer; and receiving L pieces of channel state information CSI sent by the receive end, where L is a positive integer, each of the L pieces of CSI includes index number information of J sub-bands, and J is a positive integer, or each of the L pieces of CSI includes index number information of P reference signals, and P is a positive integer.

In this embodiment of the present invention, channel quality measurement is performed based on the reference signals, and the L pieces of CSI are determined based on the measurement result. Each piece of CSI includes the index number information of the sub-bands or the index number information of the reference signals, so as to improve system performance.

With reference to the second aspect, in an implementation of the second aspect, the L pieces of CSI include one common rank indicator RI, L pre-coding matrix indicators PMIs, and L channel quality indicators CQIs.

With reference to the second aspect and the foregoing implementation, in another implementation of the second aspect, the L pieces of CSI include L RIs, the L PMIs, and the L CQIs.

With reference to the second aspect and the foregoing implementations, in another implementation of the second aspect, each of the L PMIs includes J PMIs corresponding to the J sub-bands, and/or each of the L CQIs includes J CQIs corresponding to the J sub-bands.

With reference to the second aspect and the foregoing implementations, in another implementation of the second aspect, each of the L PMIs corresponds to at least one pre-coding matrix index.

With reference to the second aspect and the foregoing implementations of the second aspect, in another implementation of the second aspect, the receiving L pieces of channel state information CSI sent by the receive end includes: receiving the L pieces of CSI sent by the receive end in a same feedback mode.

In an embodiment of the present invention, the feedback mode may be any one of feedback modes of a periodic feedback type in the 3GPP standard, such as a PUCCH 1-1 feedback mode. Alternatively, the feedback mode may be any one of feedback modes of an aperiodic feedback type in the 3GPP standard, such as a PUSCH 3-1 feedback mode. More generally, the feedback mode may be a new feedback mode that includes the L pieces of CSI. In this embodiment of the present invention, the feedback mode used for sending the L pieces of CSI is not specifically limited.

With reference to the second aspect and the foregoing implementations of the second aspect, in another implementation of the second aspect, the receiving L pieces of channel state information CSI sent by the receive end includes: receiving, by using a physical uplink shared channel PUSCH, the L pieces of CSI sent by the receive end.

In an embodiment of the present invention, the L pieces of CSI are transmitted only on the PUSCH. In this case, only one piece of CSI information or a small quantity of CSI information may be transmitted on the PUCCH, so as to reduce a demand for a PUCCH capacity expansion, and further ensure transmission reliability on the PUCCH.

With reference to the second aspect and the foregoing implementations, in another implementation of the second aspect, the method further includes: determining resource configuration information, where the resource configuration information includes time domain resource information and frequency domain resource information of each of the K reference signals, the time domain resource information includes subframe information, and the frequency domain resource information includes sub-band information.

With reference to the second aspect and the foregoing implementations, in another implementation of the second aspect, the method further includes: determining resource configuration information, where the resource configuration information includes time domain resource information of each of the K reference signals and indication information of a sub-band occupied by each reference signal, and the time domain resource information includes subframe information.

With reference to the second aspect and the foregoing implementations, in another implementation of the second aspect, the indication information of the sub-band occupied by each of the K reference signals is determined by a predefined frequency hopping pattern function.

In an example of the present invention, the information about the sub-band occupied by each reference signal is determined based on the predefined frequency hopping pattern function. Specifically, the sub-band occupied by each reference signal is determined based on a time-dependent frequency hopping pattern function. To be specific, the frequency hopping pattern function defines a change of sub-band information corresponding to a reference signal at different moments. If information about a sub-band occupied by a reference signal in subframe 1 is sub-band 1, information about a sub-band occupied in subframe 2 is sub-band 2, and so on.

In an embodiment of the present invention, the transmit end may configure start sub-band information of each of the K reference signals, and sub-band information of each reference signal is updated over time based on the frequency hopping pattern function.

With reference to the second aspect and the foregoing implementations, in another implementation of the second aspect, the J sub-bands are J sub-bands selected from a plurality of sub-bands corresponding to each of the L pieces of CSI.

With reference to the second aspect and the foregoing implementations, in another implementation of the second aspect, the P reference signals are P reference signals selected from a plurality of reference signals corresponding to at least one sub-band.

The transmit end of the channel quality measurement and feedback method in the second aspect of the embodiments of the present invention interacts with the receive end in the first aspect of the method embodiment of the present invention. For a beneficial effect of the interaction process, refer to the description in the first aspect. For brevity, details are not described herein again.

According to a third aspect, a channel quality measurement and feedback apparatus is provided, including: a receiving unit, configured to receive K reference signals sent by a transmit end, where K is a positive integer; a determining unit, configured to: perform channel quality measurement based on the K reference signals received by the receiving unit, and determine L pieces of channel state information CSI based on a measurement result, where L is a positive integer, each of the L pieces of CSI includes index number information of J sub-bands, and J is a positive integer, or each of the L pieces of CSI includes index number information of P reference signals, and P is a positive integer; and a sending unit, configured to send the L pieces of CSI determined by the determining unit to the transmit end.

In this embodiment of the present invention, channel quality measurement is performed based on the reference signals, and the L pieces of CSI are determined based on the measurement result. Each piece of CSI includes the index number information of the sub-bands or the index number information of the reference signals, so as to improve system performance.

With reference to the third aspect, in an implementation of the third aspect, the L pieces of CSI include one common rank indicator RI, L pre-coding matrix indicators PMIs, and L channel quality indicators CQIs.

With reference to the third aspect and the foregoing implementation, in another implementation of the third aspect, the L pieces of CSI include L RIs, the L PMIs, and the L CQIs.

With reference to the third aspect and the foregoing implementations, in another implementation of the third aspect, each of the L PMIs includes J PMIs corresponding to the J sub-bands, and/or each of the L CQIs includes J CQIs corresponding to the J sub-bands.

With reference to the third aspect and the foregoing implementations, in another implementation of the third aspect, each of the L PMIs corresponds to at least one pre-coding matrix index. With reference to the third aspect and the foregoing implementations, in another implementation of the third aspect, the sending unit is specifically configured to send the L pieces of CSI to the transmit end in a same feedback mode.

With reference to the third aspect and the foregoing implementations, in another implementation of the third aspect, the sending unit is specifically configured to send the L pieces of CSI to the transmit end by using a physical uplink shared channel PUSCH.

With reference to the third aspect and the foregoing implementations, in another implementation of the third aspect, the apparatus further includes a first obtaining unit, configured to obtain resource configuration information, where the resource configuration information includes time domain resource information and frequency domain resource information of each of the K reference signals, the time domain resource information includes subframe information, and the frequency domain resource information includes sub-band information.

With reference to the third aspect and the foregoing implementations, in another implementation of the third aspect, the apparatus further includes a second obtaining unit, configured to obtain resource configuration information, where the resource configuration information includes time domain resource information of each of the K reference signals and indication information of a sub-band occupied by each reference signal, and the time domain resource information includes subframe information.

With reference to the third aspect and the foregoing implementations, in another implementation of the third aspect, the indication information of the sub-band occupied by each of the K reference signals is determined by a predefined frequency hopping pattern function.

With reference to the third aspect and the foregoing implementations, in another implementation of the third aspect, the J sub-bands are J sub-bands selected from a plurality of sub-bands corresponding to each of the L pieces of CSI.

With reference to the third aspect and the foregoing implementations, in another implementation of the third aspect, the P reference signals are P reference signals selected from a plurality of reference signals corresponding to at least one sub-band.

The channel quality measurement and feedback apparatus in the third aspect in the embodiments of the present invention may correspond to the receive end in the first aspect of the method embodiments of the present invention. In addition, each unit/module in the apparatus and other operations and/or functions described above are separately intended to implement a corresponding process of the receive end in the method shown in the first aspect. For brevity, details are not described herein again.

According to a fourth aspect, a channel quality measurement and feedback apparatus is provided, including: a sending unit, configured to send K reference signals to a receive end, where K is a positive integer; and a receiving unit, configured to receive L pieces of channel state information CSI sent by the receive end, where L is a positive integer, each of the L pieces of CSI includes index number information of J sub-bands, and J is a positive integer, or each of the L pieces of CSI includes index number information of P reference signals, and P is a positive integer.

In this embodiment of the present invention, channel quality measurement is performed based on the reference signals, and the L pieces of CSI are determined based on the measurement result. Each piece of CSI includes the index number information of the sub-bands or the index number information of the reference signals, so as to improve system performance.

With reference to the fourth aspect, in an implementation of the fourth aspect, the L pieces of CSI include one common rank indicator RI, L pre-coding matrix indicators PMIs, and L channel quality indicators CQIs.

With reference to the fourth aspect and the foregoing implementation, in another implementation of the fourth aspect, the L pieces of CSI include L RIs, the L PMIs, and the L CQIs.

With reference to the fourth aspect and the foregoing implementations, in another implementation of the fourth aspect, each of the L PMIs includes J PMIs corresponding to the J sub-bands, and/or each of the L CQIs includes J CQIs corresponding to the J sub-bands.

With reference to the fourth aspect and the foregoing implementations, in another implementation of the fourth aspect, each of the L PMIs corresponds to at least one pre-coding matrix index.

With reference to the fourth aspect and the foregoing implementations, in another implementation of the fourth aspect, the receiving unit is specifically configured to receive the L pieces of CSI sent by the receive end in a same feedback mode.

With reference to the fourth aspect and the foregoing implementations, in another implementation of the fourth aspect, the receiving unit is specifically configured to receive, by using a physical uplink shared channel PUSCH, the L pieces of CSI sent by the receive end. With reference to the fourth aspect and the foregoing implementations, in another implementation of the fourth aspect, the apparatus further includes a first determining unit, configured to determine resource configuration information, where the resource configuration information includes time domain resource information and frequency domain resource information of each of the K reference signals, the time domain resource information includes subframe information, and the frequency domain resource information includes sub-band information.

With reference to the fourth aspect and the foregoing implementations, in another implementation of the fourth aspect, the apparatus further includes a second determining unit, configured to determine resource configuration information, where the resource configuration information includes time domain resource information of each of the K reference signals and indication information of a sub-band occupied by each reference signal, and the time domain resource information includes subframe information.

With reference to the fourth aspect and the foregoing implementations, in another implementation of the fourth aspect, the indication information of the sub-band occupied by each of the K reference signals is determined by a predefined frequency hopping pattern function. With reference to the fourth aspect and the foregoing implementations, in another implementation of the fourth aspect, the J sub-bands are J sub-bands selected from a plurality of sub-bands corresponding to each of the L pieces of CSI.

With reference to the fourth aspect and the foregoing implementations, in another implementation of the fourth aspect, the P reference signals are P reference signals selected from a plurality of reference signals corresponding to at least one sub-band.

The channel quality measurement and feedback apparatus in the fourth aspect in the embodiments of the present invention may correspond to the transmit end in the second aspect of the method embodiments of the present invention. In addition, each unit/module in the apparatus and other operations and/or functions described above are separately intended to implement a corresponding process of the transmit end in the method shown in the second aspect. For brevity, details are not described herein again.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic interaction flowchart of a channel quality measurement and feedback method according to an embodiment of the present invention;
FIG. 2 is a schematic interaction flowchart of a channel quality measurement and feedback method according to another embodiment of the present invention;
FIG. 3 is a schematic interaction flowchart of a channel quality measurement and feedback method according to still another embodiment of the present invention;
FIG. 4 is a block diagram of a channel quality measurement and feedback apparatus according to an embodiment of the present invention;
FIG. 5 is a block diagram of a channel quality measurement and feedback apparatus according to another embodiment of the present invention;
FIG. 6 is a block diagram of a channel quality measurement and feedback apparatus according to an embodiment of the present invention; and
FIG. 7 is a block diagram of a channel quality measurement and feedback apparatus according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should be understood that, the technical solutions in the embodiments of the present invention may be applied to various communications systems, such as: a Global System for Mobile Communications (GSM) system, a Code Division Multiple Access (CDMA) system, a Wideband Code Division Multiple Access (WCDMA) system, a general packet radio service (GPRS), a Long Term Evolution (LTE) system, an LTE frequency division duplex (FDD) system, an LTE time division duplex (TDD) system, a Universal Mobile Telecommunications System (UMTS) system, a Worldwide Interoperability for Microwave Access (WiMAX) communications system, and the like.

It should also be understood that in the embodiments of the present invention, user equipment (UE) may be referred to as a terminal, a mobile station (MS), a mobile terminal, or the like. The user equipment may communicate with one or more core networks by using a radio access network (RAN). For example, the user equipment may be a mobile phone (or referred to as a "cellular" phone) or a computer with a mobile terminal. For example, the user equipment may be a portable, pocket-sized, handheld, computer built-in, or in-vehicle mobile apparatus, which exchanges voice and/or data with the radio access network.

It should also be understood that in the embodiments of the present invention, a base station may be a base transceiver station (BTS) in GSM or CDMA, or may be a NodeB in WCDMA, or may be an evolved NodeB (evolved NodeB, eNB or e-NodeB) in LTE. This is not limited in the present invention.

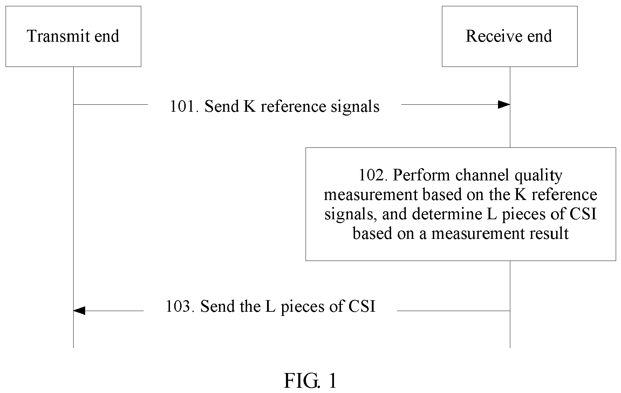

FIG. 1 is a schematic interaction flowchart of a channel quality measurement and feedback method according to an embodiment of the present invention. In this embodiment of the present invention, an example in which a reference signal is a channel state information-reference signal CSI-RS is used for illustration purposes.

It is assumed that one CSI process includes K CSI-RS resources, K is a positive integer, and the K CSI-RS resources correspond to K beam-formed beams. Entire system bandwidth is divided into M sub-bands, and M is a positive integer.

101. A transmit end sends K reference signals to a receive end.

To obtain CSI, the transmit end may send a predefined reference signal to the receive end, so that the receive end performs channel quality measurement and obtains a measurement result. For example, the transmit end may send a beam-formed CSI-RS to the receive end.

Each of the K reference signals in this embodiment of the present invention may correspond to one or more sub-bands, and each reference signal may correspond to one or more subframes. The measurement result herein may include at least one piece of the following information: a rank indicator (RI), a pre-coding matrix indicator (PMI), and a channel quality indicator (CQI). In this embodiment of the present invention, the RI is used to describe a quantity of spatial independent channels and corresponds to a rank of a channel response matrix. In open-loop spatial multiplexing and closed-loop spatial multiplexing modes, the receive end needs to feed back RI information. In another mode, the RI information may not be fed back.

The PMI means that only in a transmission mode of the closed-loop spatial multiplexing, the receive end may notify, based on measured channel quality, the transmit end of a specific pre-coding matrix that should be used to pre-code a signal to be transmitted by the transmit end. The closed-loop spatial multiplexing uses a codebook-based pre-coding technology. To be specific, a codebook that includes all possible pre-coding matrices is preset, the pre-coding matrix may be indicated by one index of the codebook, and the indication is referred to as a PMI. The CQI is an indicator of channel quality. In a 36-213 protocol, the CQI is represented by using an integer value of 0 to 15(including 1 and 15), which respectively represent different CQI levels. Different CQIs correspond to respective modulation and coding schemes (MCS). There are 16 cases in total, which may be represented by using 4-bit information.

102. The receive end may perform channel quality measurement based on a reference signal, and determine L pieces of CSI based on a measurement result, where L is a positive integer. Optionally, in this embodiment of the present invention, the reference signal may be a beam-formed reference signal. The reference signal herein may be a reference signal used for signal quality measurement, or may be a reference signal used for interference measurement.

Before step 102, the receive end may obtain resource configuration information configured by the transmit end. The resource configuration information may include time domain resource information and frequency domain resource information of each of the K reference signals. The time domain resource information may include subframe information. The frequency domain resource information may include sub-band information, or the frequency domain resource information may be indication information of a sub-band occupied by each reference signal. In an embodiment of the present invention, the indication information of the sub-band occupied by each of the K reference signals may be determined by a predefined frequency hopping pattern function.

In an example of the present invention, information about a sub-band occupied by each reference signal is determined based on a predefined frequency hopping pattern function. Specifically, the sub-band occupied by each reference signal is determined based on a time-dependent frequency hopping pattern function. To be specific, the frequency hopping pattern function defines a change of sub-band information corresponding to a reference signal at different moments. If information about a sub-band occupied by a reference signal in subframe 1 is sub-band 1, information about a sub-band occupied in subframe 2 is sub-band 2, and so on.

In an embodiment of the present invention, the transmit end may configure start sub-band information of each of the K reference signals, and sub-band information of each reference signal is updated over time based on the frequency hopping pattern function.

In an embodiment of the present invention, the time domain resource information in the resource configuration information may include subframe information used for channel quality measurement, and may further include subframe information used for interference information measurement. The frequency domain resource information in the resource configuration information may include sub-band information used for channel quality measurement, and may further include sub-band information used for interference information measurement.

The receive end may measure a CSI-RS resource based on a received reference signal by using the resource configuration information, to obtain a measurement result, and report the measurement result to the transmit end. The measurement result may include at least one of an RI, a CQI, or a PMI.

Optionally, each of the K reference signals may correspond to a plurality of sub-bands, and each of the L pieces of CSI also corresponds to one or more sub-bands. As an embodiment of the present invention, quantities of CSI-RS resource ports on different sub-bands may be the same, or may be different. When the quantities of CSI-RS resource ports on different sub-bands are the same, system performance may be improved, and the system performance is maximized.

A sub-band is also referred to as a narrowband, and each sub-band may include several resource blocks (RB). Because the sub-band is relatively small compared with the entire system bandwidth, the sub-band can reflect a difference of frequency impact on different bandwidth. Optionally, the L pieces of CSI may include L CQIs, and the L pieces of CSI may further include L PMIs. Each of the L PMIs may correspond to at least one pre-coding matrix index, in other words, each PMI may correspond to at least one pre-coding matrix. In an embodiment of the present invention, a PMI may further include a PMI 1 and a PMI 2. In this case, when a codebook structure is a dual codebook, each final codeword may correspond to two pre-coding matrix indexes. For example, each codeword corresponds to a PMI 1 and a PMI 2.

Optionally, the L pieces of CSI may correspond to one common RI, so as to reduce CSI processing complexity and reporting overheads of the receive end.

Optionally, the L pieces of CSI may correspond to L RIs, so that each piece of CSI corresponds to one RI. For example, different reference signals may correspond to different RIs, so as to improve CSI flexibility, and maximize a quantity of spatial multiplexing layers and transmission efficiency of a system.

In an embodiment of the present invention, when a reference signal quantity K and a quantity M of sub-bands obtained through division of the system bandwidth are relatively large, overheads of reporting CSI by the receive end are also relatively large. To reduce the overheads, the receive end may select and report CSI corresponding to best J sub-bands for each reference signal, where J is a positive integer, and J≤M. The best J sub-bands may be J sub-bands with optimal CSI. In an embodiment of the present invention, each of the K reference signals may correspond to a plurality of sub-bands, and each of the L pieces of CSI corresponds to one reference signal. In this case, each of the L pieces of CSI may include index number information of J sub-bands and CSI corresponding to the J sub-bands. The J sub-bands may be J sub-bands that have optimal CSI and that are selected by the receive end from a plurality of sub-bands corresponding to each of the L pieces of CSI. Each piece of CSI in this embodiment of the present invention may be obtained by performing channel quality measurement on one reference signal on the M sub-bands.

The L pieces of CSI may correspond to one common RI, or may correspond to L RIs. When the L pieces of CSI correspond to the common RI, RIs on the J sub-bands included in each piece of CSI may also be the common RI. When each piece of CSI corresponds to one RI, the J sub-bands included in each piece of CSI may correspond to one common RI, or may correspond to J RIs.

Optionally, each of the L PMIs may include J PMIs corresponding to the J sub-bands, and/or each of the L CQIs includes J CQIs corresponding to the J sub-bands. In an embodiment of the present invention, when the L pieces of CSI correspond to only the common RI, the CSI corresponding to the J sub-bands included in each of the L pieces of CSI may include the J PMIs and the J CQIs corresponding to the J sub-bands. When the L pieces of CSI correspond to the L RIs, the CSI corresponding to the J sub-bands included in each of the L pieces of CSI may include the J PMIs, the J CQIs, and the J RIs corresponding to the J sub-bands.

The receive end may perform channel quality measurement based on the reference signals, to obtain CSI that corresponds to each reference signal and that is on each sub-band, and report all pieces of CSI to the transmit end. In this case, each reference signal on each sub-band has a piece of CSI corresponding to the reference signal, but in this reporting manner, overheads of reporting the CSI may be increased.

In another embodiment of the present invention, to reduce the overheads of reporting the CSI, the receive end may select an optimal reference signal for each sub-band based on a channel quality measurement result of a plurality of reference signals on each sub-band, and report, to the transmit end, index number information of the optimal reference signal and CSI corresponding to the optimal reference signal. The index number information of the optimal reference signal may be index number information of a reference signal corresponding to optimal CSI. In other words, each of the L pieces of CSI may include index number information of P reference signals and CSI corresponding to the P reference signals, and P is a positive integer. Each of the K reference signals may correspond to one or more sub-bands. The P reference signals may be P reference signals that have optimal CSI and that are selected from a plurality of reference signals in a plurality of pieces of CSI corresponding to at least one sub-band. Each piece of CSI in this embodiment of the present invention may be obtained by performing channel quality measurement on the K reference signals on the at least one sub-band.

The L pieces of CSI may correspond to one common RI, or may correspond to L RIs. When the L pieces of CSI correspond to the common RI, an RI on one or more sub-bands included in each piece of CSI may also be the common RI. When each piece of CSI corresponds to one RI, one or more sub-bands included in each piece of CSI may correspond to one common RI, or may correspond to a plurality of RIs.

Optionally, each of the L PMIs may include one PMI corresponding to each sub-band, and each of the L CQIs includes one CQI corresponding to each sub-band. In an embodiment of the present invention, when the L pieces of CSI only have the common RI, each sub-band may correspond to one PMI and one CQI. When the L pieces of CSI correspond to the L RIs, each sub-band may correspond to one PMI, one CQI, and one RI.

Particularly, each of the K reference signals may correspond to one sub-band, in other words, each reference signal is located on a designated sub-band. The receive end may still select one or more optimal reference signals for each sub-band based on the channel quality measurement result of the plurality of reference signals on each sub-band, and report, to the transmit end, index number information of the optimal reference signal and CSI corresponding to the optimal reference signal. In this case, the resource configuration information may further include frequency hopping indication information of a reference signal on a plurality of sub-bands of system bandwidth. The frequency hopping indication information may be used to indicate corresponding frequency hopping, and corresponding frequency hopping may be completed based on the frequency hopping indication information. The frequency hopping of the reference signal on the plurality of sub-bands of the system bandwidth can ensure that the receive end obtains channel quality of the entire system bandwidth.

103. The receive end reports the L pieces of CSI to the transmit end.

In an LTE system, a CSI feedback mode may be any one of feedback modes of a periodic feedback type, or may be any one of feedback modes of an aperiodic feedback type, or may be a new feedback mode that includes the L pieces of CSI. Feedback modes of the L pieces of CSI may be the same, to be specific, the receive end may feed back, in a same feedback mode, the L pieces of CSI obtained in step 102 to the transmit end. For periodic feedback, if the receive end does not need to transmit data to the transmit end, CSI may be periodically fed back by transmitting the L pieces of CSI on a physical uplink control channel (PUCCH) or physical downlink control channel (PDCCH) in format 2, 2a, or 2b. If the receive end needs to transmit data to the transmit end, CSI may be periodically fed back by transmitting the L pieces of CSI on a physical downlink shared channel (PDSCH). For aperiodic feedback, CSI can only be fed back by transmitting the L pieces of CSI on a PUSCH or a PDSCH. Preferably, when L is greater than or equal to 2, the L pieces of CSI may be fed back only on a PUSCH.

In an embodiment of the present invention, each piece of CSI may be reported by using one of a PUCCH, a physical uplink shared channel (PUSCH), a PDCCH, or/and a PDSCH. Preferably, the receive end may send the L pieces of CSI to the transmit end by using a PUSCH. In this feedback manner, a CSI transmission capacity may not be limited.

The receive end in this embodiment of the present invention may be user equipment, and the transmit end may be a base station. However, the present invention is not limited thereto.

The reference signal in this embodiment of the present invention may be a CSI-RS, or may be a reference signal of another type, such as a dedicated demodulation reference signal (DMRS), and a cell-specific reference signal (CRS).

In this embodiment of the present invention, channel quality measurement is performed based on the reference signals, and the L pieces of CSI are determined based on the measurement result. Each piece of CSI includes the index number information of the sub-bands or the index number information of the reference signals, so as to improve system performance.

As shown in FIG. 1, the foregoing describes the channel quality measurement and feedback method according to the embodiments of the present invention from a perspective of an interaction between the transmit end and the receive end. The following describes in detail the channel quality measurement and feedback method according to the embodiments of the present invention with reference to specific embodiments. It should be noted that these examples are merely intended to help a person skilled in the art better understand the embodiments of the present invention, but are not intended to limit the scope of the embodiments of the present invention.

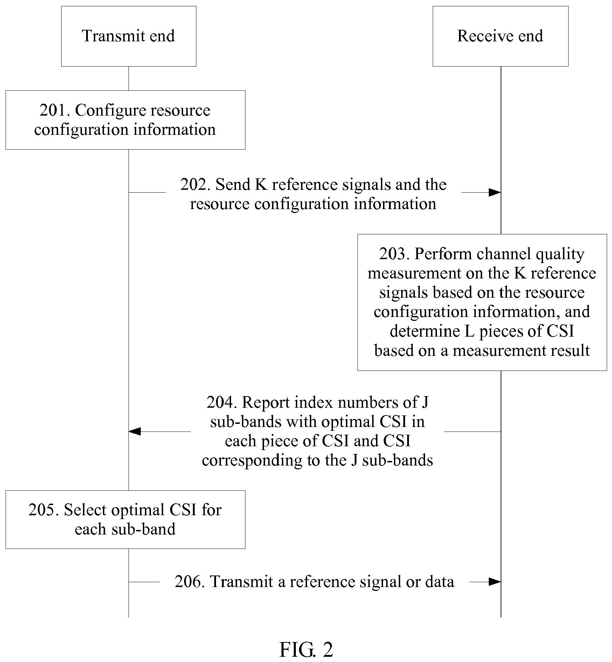

FIG. 2 is a schematic interaction diagram of a channel quality measurement and feedback method according to another embodiment of the present invention.

201. A transmit end configures resource configuration information.

The resource configuration information may include time domain resource information and frequency domain resource information of each of K reference signals. The time domain resource information may include subframe information. The frequency domain resource information may include sub-band information, or the frequency domain resource information may be indication information of a sub-band occupied by each reference signal. In an embodiment of the present invention, the indication information of the sub-band occupied by each of the K reference signals may be determined by a predefined frequency hopping pattern function.

In an embodiment of the present invention, the time domain resource information in the resource configuration information may include subframe information used for channel quality measurement, and may further include subframe information used for interference information measurement. The frequency domain resource information in the resource configuration information may include sub-band information used for channel quality measurement, and may further include sub-band information used for interference information measurement.

202. The transmit end sends K reference signals and resource configuration information of the K reference signals to a receive end.

The transmit end may send a predefined reference signal and resource configuration information to the receive end, so that the receive end performs channel quality measurement based on the resource configuration information, so as to obtain CSI from an obtained measurement result.

203. The receive end performs channel quality measurement on the reference signals based on the resource configuration information of the K reference signals, and obtains L pieces of CSI based on a measurement result.

Optionally, the receive end may perform channel quality measurement on the K reference signals based on the resource configuration information, to obtain K pieces of CSI, select the L pieces of CSI from the K pieces of CSI, and report the L pieces of CSI.

Optionally, the receive end may also select L reference signals from the K reference signals based on the resource configuration information to perform channel quality measurement, so as to obtain the L pieces of CSI.

In this embodiment of the present invention, L is a positive integer, and L≤K.

Each piece of CSI may include CSI corresponding to an optimal sub-band selected from a plurality of sub-bands and index number information corresponding to the sub-band. The optimal sub-band herein may be a sub-band corresponding to optimal CSI.

Optionally, the L pieces of CSI may include L CQIs, and the L pieces of CSI may further include L PMIs. In an embodiment of the present invention, the L pieces of CSI may correspond to L RIs, or may correspond to one common RI. When the L pieces of CSI may correspond to the L RIs, each piece of CSI may include one RI corresponding to each sub-band in the plurality of sub-bands of each piece of CSI.

204. The transmit end sends the L pieces of CSI to the receive end, and each piece of CSI includes optimal CSI and sub-band index number information of a sub-band corresponding to the optimal CSI.

After the L pieces of CSI are obtained in step 203, the transmit end may feed back the L pieces of CSI to the receive end. Each piece of CSI includes the optimal CSI and the index number information of the sub-band corresponding to the optimal CSI.

205. The receive end selects optimal CSI for each sub-band based on the received L pieces of CSI.

The receive end may receive the L pieces of CSI, and each piece of CSI includes CSI of an optimal sub-band. The receive end may find, based on the received L pieces of CSI, optimal CSI from a plurality of pieces of CSI corresponding to each sub-band, and use the optimal CSI as CSI of the sub-band.

206. Transmit a reference signal or data between the transmit end and the receive end based on the CSI of each sub-band.

After both the receive end and the transmit end have the L pieces of CSI, information may be transmitted between the receive end and the transmit end based on channel state information. For example, a next reference signal may be transmitted, or data may be transmitted based on the channel state information.

In this embodiment of the present invention, corresponding CSI is determined for each sub-band, so as to ensure that a relatively matched pre-coding matrix is applied to a reference signal or data transmitted on each sub-band, and improve system performance of a CSI mechanism.

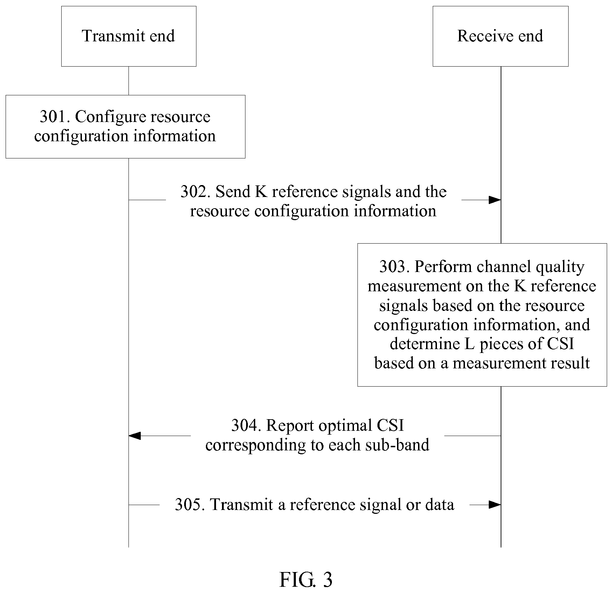

FIG. 3 is a schematic interaction diagram of a channel quality measurement and feedback method according to still another embodiment of the present invention.

301. A transmit end configures resource configuration information.

For a specific implementation of step 301, refer to step 201. To avoid repetition, details are not described herein again.

302. The transmit end sends K reference signals and resource configuration information of the K reference signals to a receive end.

For a specific implementation of step 302, refer to step 202. To avoid repetition, details are not described herein again.

303. The receive end performs channel quality measurement on the reference signals based on the resource configuration information of the K reference signals, and obtains L pieces of CSI. Optionally, the receive end may perform channel quality measurement on the K reference signals based on the resource configuration information to obtain K pieces of CSI. The receive end may select, for each sub-band, an optimal reference signal from a plurality of reference signals based on CSI corresponding to the plurality of reference signals on each sub-band, and use CSI corresponding to the optimal reference signal as CSI of the sub-band. In this case, each piece of CSI corresponds to one sub-band.

The receive end may alternatively select an optimal reference signal from a plurality of reference signals on a plurality of sub-bands, and use CSI corresponding to the optimal reference signal as CSI of the plurality of sub-bands. In this case, each piece of CSI corresponds to the plurality of sub-bands.

Each piece of CSI may correspond to one or more sub-bands, and each piece of CSI includes index number information of the optimal reference signal and CSI of the one or more sub-bands corresponding to the optimal reference signal. It is assumed that entire system bandwidth is divided into M sub-bands, M is a positive integer. If the L pieces of CSI are reported in this embodiment of the present invention, L≤M.

In this embodiment of the present invention, the optimal reference signal may be a reference signal corresponding to optimal CSI.

Optionally, the L pieces of CSI may include L CQIs, and the L pieces of CSI may further include L PMIs. In an embodiment of the present invention, the L pieces of CSI may correspond to L RIs, or may correspond to one common RI. When the L pieces of CSI may correspond to the L RIs, each piece of CSI may include one RI corresponding to each sub-band in the plurality of sub-bands of each piece of CSI.

304. The receive end reports CSI corresponding to a sub-band to the transmit end.

The receive end may report the L pieces of CSI to the transmit end. Each piece of CSI includes the index number information of the optimal reference signal and CSI corresponding to the optimal reference signal, and each piece of CSI may correspond to one or more sub-bands, in other words, CSI reported to the transmit end by the receive end may be the CSI corresponding to the sub-band.

305. Transmit a reference signal or data between the transmit end and the receive end based on the CSI corresponding to the sub-band.

After both the receive end and the transmit end have the L pieces of CSI, information may be transmitted between the receive end and the transmit end based on channel state information. For example, a next reference signal may be transmitted, or data may be transmitted based on the channel state information.

In this embodiment of the present invention, corresponding CSI is determined for each sub-band, so as to ensure that a relatively matched pre-coding matrix is applied to a reference signal or data transmitted on each sub-band, and improve system performance of a CSI mechanism.

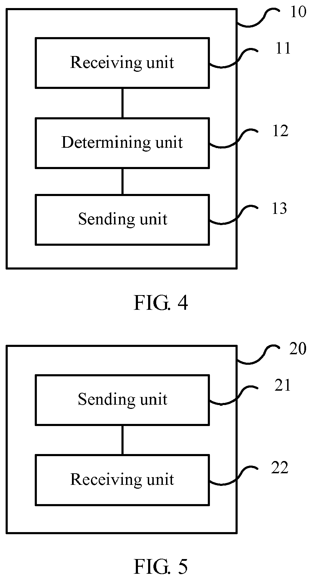

With reference to FIG. 1 to FIG. 3, the foregoing describes in detail the channel quality measurement and feedback method according to embodiments of the present invention from the perspective of the interaction between the transmit end and the receive end. The following describes, with reference to block diagrams of a channel quality measurement and feedback apparatus in FIG. 4 to FIG. 7, the channel quality measurement and feedback apparatus according to the embodiments of the present invention from perspectives of the receive end and the transmit end.

FIG. 4 is a block diagram of a channel quality measurement and feedback apparatus according to an embodiment of the present invention. The apparatus in FIG. 4 may perform the method performed by the receive end in FIG. 1 to FIG. 3. An apparatus 10 in FIG. 4 includes a receiving unit 11, a determining unit 12, and a sending unit 13.

The receiving unit 11 is configured to receive K reference signals sent by a transmit end, where K is a positive integer.

The determining unit 12 is configured to: perform channel quality measurement based on the K reference signals received by the receiving unit, and determine L pieces of channel state information CSI based on a measurement result, where L is a positive integer. Each of the L pieces of CSI includes index number information of J sub-bands, and J is a positive integer, or each of the L pieces of CSI includes index number information of P reference signals, and P is a positive integer.

The sending unit 13 is configured to send the L pieces of CSI determined by the determining unit to the transmit end.

In this embodiment of the present invention, channel quality measurement is performed based on the reference signals, and the L pieces of CSI are determined based on the measurement result. Each piece of CSI includes the index number information of the sub-bands or the index number information of the reference signals, so as to improve system performance.

The channel quality measurement and feedback apparatus in this embodiment of the present invention may correspond to the receive end in the method of the embodiments of the present invention. In addition, each unit/module in the apparatus and other operations and/or functions described above are separately intended to implement a corresponding process of the receive end in the method shown in FIG. 1 to FIG. 3. For brevity, details are not described herein again.

FIG. 5 is a block diagram of a channel quality measurement and feedback apparatus according to another embodiment of the present invention. The apparatus in FIG. 5 may perform the method performed by the transmit end in FIG. 1 to FIG. 3. An apparatus 20 in FIG. 5 includes a sending unit 21 and a receiving unit 22.

The sending unit 21 is configured to send K reference signals to a receive end, where K is a positive integer.

The receiving unit 22 is configured to receive L pieces of channel state information CSI sent by the receive end, where L is a positive integer. Each of the L pieces of CSI includes index number information of J sub-bands, and J is a positive integer, or each of the L pieces of CSI includes index number information of P reference signals, and P is a positive integer.

In this embodiment of the present invention, channel quality measurement is performed based on the reference signals, and the L pieces of CSI are determined based on the measurement result. Each piece of CSI includes the index number information of the sub-bands or the index number information of the reference signals, so as to improve system performance.

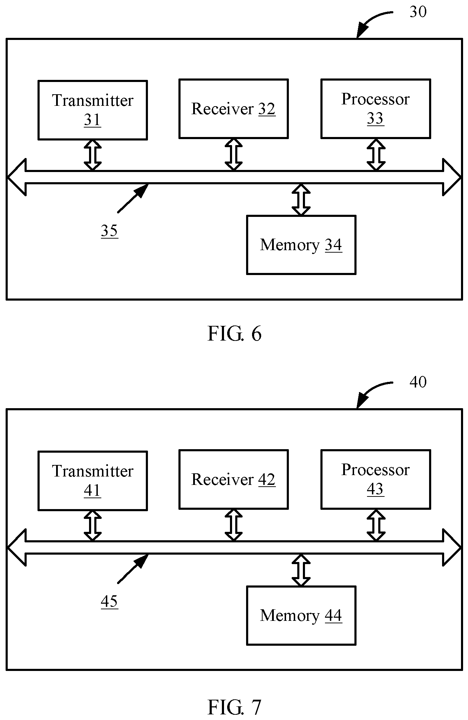

The channel quality measurement and feedback apparatus in this embodiment of the present invention may correspond to the transmit end in the method of the embodiments of the present invention. In addition, each unit/module in the apparatus and other operations and/or functions described above are separately intended to implement a corresponding process of the transmit end in the method shown in FIG. 1 to FIG. 3. For brevity, details are not described herein again. FIG. 6 is a block diagram of a channel quality measurement and feedback apparatus according to an embodiment of the present invention. An apparatus 30 in FIG. 6 includes a transmitter 31, a receiver 32, a processor 33, and a memory 34. The processor 33 controls an operation of the apparatus 30, and may be configured to process a signal. The memory 34 may include a read-only memory and a random access memory, and provide an instruction and data for the processor 33. All components of the apparatus 30 are coupled together by using a bus system 35. In addition to a data bus, the bus system 35 further includes a power bus, a control bus, and a status signal bus. However, for clarity of description, various buses are marked as the bus system 35 in the figure.

The method disclosed in the foregoing embodiments of the present invention may be applied to the processor 33, or implemented by the processor 33. In an implementation process, each step of the foregoing method may be completed by using an integrated logical circuit of hardware in the processor 33 or an instruction in a form of software. The processor 33 may be a general purpose processor, a digital signal processor, an application-specific integrated circuit, a field programmable gate array or another programmable logic device, a discrete gate or a transistor logic device, or a discrete hardware component, and may implement or perform each method, step and logic block diagram disclosed in the embodiments of the present invention. The general-purpose processor may be a microprocessor, may be any conventional processor, or the like. The steps of the method disclosed with reference to the embodiments of the present invention may be directly performed and completed by a hardware processor, or may be performed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory 34, and the processor 33 reads information in the memory 34 and implements the steps of the foregoing method in combination with hardware of the processor 33. Specifically, the receiver 32 may be configured to receive K reference signals sent by a transmit end, where K is a positive integer.

The processor 33 may perform channel quality measurement based on the K reference signals received by the receiver 32, and determine L pieces of channel state information CSI based on a measurement result, where L is a positive integer. Each of the L pieces of CSI includes index number information of J sub-bands, and J is a positive integer, or each of the L pieces of CSI includes index number information of P reference signals, and P is a positive integer.

The transmitter 31 may send the L pieces of CSI to the transmit end.

In this embodiment of the present invention, channel quality measurement is performed based on the reference signals, and the L pieces of CSI are determined based on the measurement result. Each piece of CSI includes the index number information of the sub-bands or the index number information of the reference signals, so as to improve system performance.

The channel quality measurement and feedback apparatus in this embodiment of the present invention may correspond to the transmit end in the method of the embodiments of the present invention. In addition, each unit/module in the apparatus and other operations and/or functions described above are separately intended to implement a corresponding process of the transmit end in the method shown in FIG. 1 to FIG. 3. For brevity, details are not described herein again. In this embodiment of the present invention, channel quality measurement is performed based on the reference signals, and the L pieces of CSI are determined based on the measurement result. Each piece of CSI includes the index number information of the sub-bands or the index number information of the reference signals, so as to improve system performance.

The channel quality measurement and feedback apparatus in this embodiment of the present invention may correspond to the receive end in the method of the embodiments of the present invention. In addition, each unit/module in the apparatus and other operations and/or functions described above are separately intended to implement a corresponding process of the receive end in the method shown in FIG. 1 to FIG. 3. For brevity, details are not described herein again.

FIG. 7 is a block diagram of a channel quality measurement and feedback apparatus according to another embodiment of the present invention. An apparatus 40 in FIG. 7 includes a transmitter 41, a receiver 42, a processor 43, and a memory 44. The processor 43 controls an operation of the apparatus 40, and may be configured to process a signal. The memory 44 may include a read-only memory and a random access memory, and provide an instruction and data for the processor 43. All components of the apparatus 40 are coupled together by using a bus system 45. In addition to a data bus, the bus system 45 further includes a power bus, a control bus, and a status signal bus. However, for clarity of description, various buses are marked as the bus system 45 in the figure.

The method disclosed in the foregoing embodiments of the present invention may be applied to the processor 43, or implemented by the processor 43. In an implementation process, each step of the foregoing method may be completed by using an integrated logical circuit of hardware in the processor 43 or an instruction in a form of software. The processor 43 may be a general purpose processor, a digital signal processor, an application-specific integrated circuit, a field programmable gate array or another programmable logic device, a discrete gate or a transistor logic device, or a discrete hardware component, and may implement or perform each method, step and logic block diagram disclosed in the embodiments of the present invention. The general-purpose processor may be a microprocessor, may be any conventional processor, or the like. The steps of the method disclosed with reference to the embodiments of the present invention may be directly performed and completed by a hardware processor, or may be performed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory 44, and the processor 43 reads information in the memory 44 and implements the steps of the foregoing method in combination with hardware of the processor 43. Specifically, the transmitter 41 may send K reference signals to a receive end, where K is a positive integer.

The receiver 32 may be configured to receive L pieces of channel state information CSI sent by the receive end, where L is a positive integer. Each of the L pieces of CSI includes index number information of J sub-bands, and J is a positive integer, or each of the L pieces of CSI includes index number information of P reference signals, and P is a positive integer.

In this embodiment of the present invention, channel quality measurement is performed based on the reference signals, and the L pieces of CSI are determined based on the measurement result. Each piece of CSI includes the corresponding index number information of the sub-bands or the corresponding index number information of the reference signals, so as to improve system performance.

The channel quality measurement and feedback apparatus in this embodiment of the present invention may correspond to the transmit end in the method of the embodiments of the present invention. In addition, each unit/module in the apparatus and other operations and/or functions described above are separately intended to implement a corresponding process of the transmit end in the method shown in FIG. 1 to FIG. 3. For brevity, details are not described herein again. It should be understood that "one embodiment" or "an embodiment" mentioned in the whole specification means that particular features, structures, or characteristics related to the embodiment are included in at least one embodiment of the present invention. Therefore, "in one embodiment" or "in an embodiment" that appears throughput the whole specification does not necessarily mean a same embodiment. Moreover, the particular characteristic, structure or property may be combined in one or more embodiments in any proper manner.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

It should be understood that in the embodiments of the present invention, "B corresponding to A" indicates that B is associated with A, and B may be determined according to A. However, it should further be understood that determining B according to A does not mean that B is determined according to A only; that is, B may also be determined according to A and/or other information.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, the units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the system, apparatus, and unit, reference may be made to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

The descriptions are only specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A channel quality measurement and feedback method performed by a receive end, comprising:
receiving K reference signals sent by a transmit end, wherein K is a positive integer, and each of the K reference signals corresponds to one or more sub-bands;
performing channel quality measurement based on the K reference signals, and determining L pieces of channel state information CSI based on a measurement result, wherein L is a positive integer, each of the L pieces of CSI comprises index number information of P reference signals, and P is a positive integer, wherein the P reference signals are P reference signals that have optimal CSI in a plurality of pieces of CSI, and that are selected by the receive end from a plurality of reference signals corresponding to at least one sub-band, and each piece of CSI is obtained by performing channel quality measurement on the K reference signals on the at least one sub-band; and
sending the L pieces of CSI to the transmit end.

2. The method according to claim 1, wherein the L pieces of CSI comprise one common rank indicator RI, L pre-coding matrix indicators PMIs, and L channel quality indicators CQIs.

3. The method according to claim 1, wherein the L pieces of CSI comprise L RIs, L PMIs, and L CQIs.

4. The method according to any one of claims 2 to 3, wherein each of the L PMIs corresponds to at least one pre-coding matrix index.

5. The method according to any one of claims 1 to 4, wherein the sending the L pieces of CSI to the transmit end comprises:
sending the L pieces of CSI to the transmit end in a same feedback mode.

6. The method according to any one of claims 1 to 4, wherein the sending the L pieces of CSI to the transmit end comprises:
sending the L pieces of CSI to the transmit end by using a physical uplink shared channel PUSCH.

7. The method according to any one of claims 1 to 6, wherein the method further comprises:
obtaining resource configuration information, wherein the resource configuration information comprises time domain resource information and frequency domain resource information of each of the K reference signals, the time domain resource information comprises subframe information, and the frequency domain resource information comprises sub-band information.

8. A channel quality measurement and feedback receive end apparatus, comprising:
a receiving unit, configured to receive K reference signals sent by a transmit end, wherein K is a positive integer, and each of the K reference signals corresponds to one or more sub-bands;
a determining unit, configured to: perform channel quality measurement based on the K reference signals received by the receiving unit, and determine L pieces of channel state information CSI based on a measurement result, wherein L is a positive integer, each of the L pieces of CSI comprises index number information of P reference signals, and P is a positive integer, wherein the P reference signals are P reference signals that have optimal CSI in a plurality of pieces of CSI, and wherein the receive end apparatus is configured to select from a plurality of reference signals corresponding to at least one sub-band, and to obtain each piece of CSI by performing channel quality measurement on the K reference signals on the at least one sub-band; and
a sending unit, configured to send the L pieces of CSI determined by the determining unit to the transmit end.

9. The apparatus according to claim 8, wherein the L pieces of CSI comprise one common rank indicator RI, L pre-coding matrix indicators PMIs, and L channel quality indicators CQIs.

10. The apparatus according to claim 8, wherein the L pieces of CSI comprise L RIs, L PMIs, and L CQIs.

11. The apparatus according to any one of claims 9 to 10, wherein each of the L PMIs corresponds to at least one pre-coding matrix index.

12. The apparatus according to any one of claims 8 to 11, wherein the sending unit is specifically configured to send the L pieces of CSI to the transmit end in a same feedback mode.

13. The apparatus according to any one of claims 8 to 11, wherein the sending unit is specifically configured to send the L pieces of CSI to the transmit end by using a physical uplink shared channel PUSCH.

14. The apparatus according to any one of claims 8 to 13, wherein the apparatus further comprises:
a first obtaining unit, configured to obtain resource configuration information, wherein the resource configuration information comprises time domain resource information and frequency domain resource information of each of the K reference signals, the time domain resource information comprises subframe information, and the frequency domain resource information comprises sub-band information.

## Patentansprüche

1. Kanalqualitätsmess- und -rückmeldeverfahren, das von einem Empfangsende durchgeführt wird und Folgendes umfasst:
Empfangen von K Referenzsignalen, die von einem Übertragungsende gesendet werden, wobei K eine positive Ganzzahl ist und jedes der K Referenzsignale einem oder mehreren Unterbändern entspricht;
Durchführen einer Kanalqualitätsmessung auf Basis der K Referenzsignale und Bestimmen von L Elementen von Kanalzustandsinformationen CSI auf Basis eines Messergebnisses, wobei L eine positive Ganzzahl ist, jedes der L Elemente von CSI Indexzahlinformationen von P Referenzsignalen umfasst und P eine positive Ganzzahl ist, wobei die P Referenzsignale P Referenzsignale sind, die in einer Vielzahl von Elementen von CSI optimale CSI aufweisen und die vom Empfangsende aus einer Vielzahl von Referenzsignalen, die mindestens einem Unterband entsprechen, ausgewählt werden, und jedes Element von CSI durch Durchführen einer Kanalqualitätsmessung an den K Referenzsignalen auf dem mindestens einen Unterband erhalten wird; und
Senden der L Elemente von CSI an das Übertragungsende.

2. Verfahren nach Anspruch 1, wobei die L Elemente von CSI einen gemeinsamen Rangindikator RI, L Vorcodierungsmatrixindikatoren PMIs und L Kanalqualitätsindikatoren CQIs umfassen.

3. Verfahren nach Anspruch 1, wobei die L Elemente von CSI L RIs, L PMIs und L CQIs umfassen.

4. Verfahren nach einem der Ansprüche 2 bis 3, wobei jeder der L PMIs mindestens einem Vorcodierungsmatrixindex entspricht.

5. Verfahren nach einem der Ansprüche 1 bis 4, wobei das Senden der L Elemente von CSI an das Übertragungsende Folgendes umfasst:
Senden der L Elemente von CSI an das Übertragungsende in einem selben Rückmeldungsmodus.

6. Verfahren nach einem der Ansprüche 1 bis 4, wobei das Senden der L Elemente von CSI an das Übertragungsende Folgendes umfasst:
Senden der L Elemente von CSI an das Übertragungsende unter Verwendung eines physischen "Uplink Shared Channel" PUSCH.

7. Verfahren nach einem der Ansprüche 1 bis 6, wobei das Verfahren ferner Folgendes umfasst:
Erhalten von Ressourcenauslegungsinformationen, wobei die Ressourcenauslegungsinformationen Zeitdomänenressourceninformationen und Frequenzdomänenressourceninformationen von jedem der K Referenzsignale umfassen, die Zeitdomänenressourceninformationen Unterrahmeninformationen umfassen und die Frequenzdomänenressourceninformationen Unterbandinformationen umfassen.

8. Kanalqualitätsmess- und -rückmeldeempfangsendvorrichtung, die Folgendes umfasst:
eine Empfangseinheit, die dazu ausgelegt ist, K Referenzsignale, die von einem Übertragungsende gesendet werden, zu empfangen, wobei K eine positive Ganzzahl ist und jedes der K Referenzsignale einem oder mehreren Unterbändern entspricht;
eine Bestimmungseinheit, die zu Folgendem ausgelegt ist: Durchführen einer Kanalqualitätsmessung auf Basis der K Referenzsignale, die von der Empfangseinheit empfangen wurden, und Bestimmen von L Elementen von Kanalzustandsinformationen CSI auf Basis eines Messergebnisses, wobei L eine positive Ganzzahl ist, jedes der L Elemente von CSI Indexzahlinformationen von P Referenzsignalen umfasst und P eine positive Ganzzahl ist, wobei die P Referenzsignale P Referenzsignale sind, die in einer Vielzahl von Elementen von CSI optimale CSI aufweisen, und wobei die Empfangsendvorrichtung dazu ausgelegt ist, aus einer Vielzahl von Referenzsignalen, die mindestens einem Unterband entsprechen, auszuwählen und jedes Element von CSI durch Durchführen einer Kanalqualitätsmessung an den K Referenzsignalen auf dem mindestens einen Unterband zu erhalten; und
eine Sendeeinheit, die dazu ausgelegt ist, die L Elemente von CSI, die von der Bestimmungseinheit bestimmt wurden, an das Übertragungsende zu senden.

9. Vorrichtung nach Anspruch 8, wobei die L Elemente von CSI einen gemeinsamen Rangindikator RI, L Vorcodierungsmatrixindikatoren PMIs und L Kanalqualitätsindikatoren CQIs umfassen.

10. Vorrichtung nach Anspruch 8, wobei die L Elemente von CSI L RIs, L PMIs und L CQIs umfassen.

11. Vorrichtung nach einem der Ansprüche 9 bis 10, wobei jeder der L PMIs mindestens einem Vorcodierungsmatrixindex entspricht.

12. Vorrichtung nach einem der Ansprüche 8 bis 11, wobei die Sendeeinheit speziell dazu ausgelegt ist, die L Elemente von CSI in einem selben Rückmeldungsmodus an das Übertragungsende zu senden.

13. Vorrichtung nach einem der Ansprüche 8 bis 11, wobei die Sendeeinheit speziell dazu ausgelegt ist, die L Elemente von CSI unter Verwendung eines physischen "Uplink Shared Channel" PUSCH an das Übertragungsende zu senden.

14. Vorrichtung nach einem der Ansprüche 8 bis 13, wobei die Vorrichtung ferner Folgendes umfasst:
eine erste Erhaltungseinheit, die dazu ausgelegt ist, Ressourcenauslegungsinformationen zu erhalten, wobei die Ressourcenauslegungsinformationen Zeitdomänenressourceninformationen und Frequenzdomänenressourceninformationen von jedem der K Referenzsignale umfassen, die Zeitdomänenressourceninformationen Unterrahmeninformationen umfassen und die Frequenzdomänenressourceninformationen Unterbandinformationen umfassen.

## Revendications

1. Procédé de mesure de qualité de voie et de rétroaction réalisé par une extrémité de réception, comprenant :
la réception de K signaux de référence envoyés par une extrémité d'émission, K étant un entier positif, et chacun des K signaux de référence correspondant à une ou plusieurs sous-bandes ;
la réalisation d'une mesure de qualité de voie sur la base des K signaux de référence, et la détermination de L éléments d'information d'état de voie CSI sur la base d'un résultat de mesure, L étant un entier positif, chacun des L éléments de CSI comprenant des informations de numéros d'indice de P signaux de référence, et P étant un entier positif, les P signaux de référence étant P signaux de référence qui ont une CSI optimale parmi une pluralité d'éléments de CSI, et qui sont sélectionnés par l'extrémité de réception dans une pluralité de signaux de référence correspondant à au moins une sous-bande, et chaque élément de CSI étant obtenu en réalisant une mesure de qualité de voie sur les K signaux de référence sur l'au moins une sous-bande ; et
l'envoi des L éléments de CSI à l'extrémité d'émission.

2. Procédé selon la revendication 1, dans lequel les L éléments de CSI comprennent un indicateur de rang commun RI, L indicateurs de matrice de précodage PMI, et L indicateurs de qualité de voie CQI.

3. Procédé selon la revendication 1, dans lequel les L éléments de CSI comprennent L RI, L PMI, et L CQI.

4. Procédé selon l'une quelconque des revendications 2 et 3, dans lequel chacun des L PMI correspond à au moins un indice de matrice de précodage.

5. Procédé selon l'une quelconque des revendications 1 à 4, dans lequel l'envoi des L éléments de CSI à l'extrémité d'émission comprend :
l'envoi des L éléments de CSI à l'extrémité d'émission dans un même mode de rétroaction.

6. Procédé selon l'une quelconque des revendications 1 à 4, dans lequel l'envoi des L éléments de CSI à l'extrémité d'émission comprend :
l'envoi des L éléments de CSI à l'extrémité d'émission au moyen d'une voie partagée de liaison montante physique PUSCH.

7. Procédé selon l'une quelconque des revendications 1 à 6, le procédé comprenant en outre :
l'obtention d'informations de configuration de ressources, les informations de configuration de ressources comprenant des informations de ressources dans le domaine temporel et des informations de ressources dans le domaine fréquentiel de chacun des K signaux de référence, les informations de ressources dans le domaine temporel comprenant des informations de sous-trames, et les informations de ressources dans le domaine fréquentiel comprenant des informations de sous-bandes.

8. Appareil d'extrémité de réception de mesure de qualité de voie et de rétroaction, comprenant :
une unité de réception, configurée pour recevoir K signaux de référence envoyés par une extrémité d'émission, K étant un entier positif, et chacun des K signaux de référence correspondant à une ou plusieurs sous-bandes ;
une unité de détermination, configurée pour : réaliser une mesure de qualité de voie sur la base des K signaux de référence reçus par l'unité de réception, et déterminer L éléments d'information d'état de voie CSI sur la base d'un résultat de mesure, L étant un entier positif, chacun des L éléments de CSI comprenant des informations de numéros d'indice de P signaux de référence, et P étant un entier positif, les P signaux de référence étant P signaux de référence qui ont une CSI optimale dans une pluralité d'éléments de CSI, et l'appareil d'extrémité de réception étant configuré pour effectuer une sélection parmi une pluralité de signaux de référence correspondant à au moins une sous-bande, et pour obtenir chaque élément de CSI en réalisant une mesure de qualité de voie sur les K signaux de référence sur l'au moins une sous-bande ; et
une unité d'envoi, configurée pour envoyer les L éléments de CSI déterminés par l'unité de détermination à l'extrémité d'émission.

9. Appareil selon la revendication 8, dans lequel les L éléments de CSI comprennent un indicateur de rang commun RI, L indicateurs de matrice de précodage PMI, et L indicateurs de qualité de voie CQI.

10. Appareil selon la revendication 8, dans lequel les L éléments de CSI comprennent L RI, L PMI, et L CQI.

11. Appareil selon l'une quelconque des revendications 9 et 10, dans lequel chacun des L PMI correspond à au moins un indice de matrice de précodage.

12. Appareil selon l'une quelconque des revendications 8 à 11, dans lequel l'unité d'envoi est spécifiquement configurée pour envoyer les L éléments de CSI à l'extrémité d'émission dans un même mode de rétroaction.

13. Appareil selon l'une quelconque des revendications 8 à 11, dans lequel l'unité d'envoi est spécifiquement configurée pour envoyer les L éléments de CSI à l'extrémité d'émission en utilisant une voie partagée de liaison montante physique PUSCH.

14. Appareil selon l'une quelconque des revendications 8 à 13, l'appareil comprenant en outre :
une première unité d'obtention, configurée pour obtenir des informations de configuration de ressources, les informations de configuration de ressources comprenant des informations de ressources dans le domaine temporel et des informations de ressources dans le domaine fréquentiel de chacun des K signaux de référence, les informations de ressources dans le domaine temporel comprenant des informations de sous-trames, et les informations de ressources dans le domaine fréquentiel comprenant des informations de sous-bandes.
